# FASCICULE DE BREVET EUROPEEN

(11) **EP 0 536 011 B1**
(45) Date de publication et mention de la délivrance du brevet: **15.05.1996**
(21) Numéro de dépôt: 92402284.1
(22) Date de dépôt: 13.08.1992
(51) Int. Cl.: G05B 19/05

(54) **Dispositif de commande et de protection de sorties, notamment pour automate programmable**
Steuerungs und Ausgangsschutzverfahren, insbesondere für eine programmierbare Steuerung
Control and output protection system, especially for a programmable controller

(30) Priorité: 05.09.1991 FR 9110972
(43) Date de publication de la demande: 07.04.1993
(73) Titulaire: AEG SCHNEIDER AUTOMATION, F-75016 Paris (FR)
(72) Inventeur: Gohl, Pierre, F-06480 La Colle Sur Loup (FR); Pergent, Jacky, F-06510 Carros le Neuf (FR)
(74) Mandataire: de Saint-Palais, Arnaud Marie

(56) Documents cités:
- DE-A- 2 726 537
- FR-A- 2 607 274
- FR-A- 2 650 451
- US-A- 4 912 619
- US-A- 4 951 250

## Description

La présente invention concerne un dispositif de commande et de protection de sorties en courant continu, pour un ensemble de commande programmable tel qu'un automate programmable.

Il est connu de protéger contre les courts-circuits des sorties en courant continu d'un automate programmable au moyen d'un circuit de protection associé à chaque voie de sortie. Un tel circuit comprend généralement un organe de traitement dont une broche d'entrée est connectée à un élément détecteur de surintensité qui est associé à la voie de sortie. L'organe de traitement compare à un seuil le niveau de l'intensité détectée et délivre un signal lorsque cette intensité dépasse le seuil ; le signal résultant est filtré puis appliqué à un élément logique de mémorisation réarmable, tel qu'une bascule, dont la sortie est connectée à une broche de sortie du circuit de protection. Le signal de blocage disponible sur la broche de sortie est appliqué à l'entrée inverseuse d'une porte ET qui reçoit, d'autre part, un signal de commande provenant d'un processeur ou d'une unité de gestion de l'automate programmable ; la sortie de la porte ET est appliquée à un interrupteur de puissance qui commande l'ouverture et la fermeture de la voie de sortie en fonction du signal de commande et du signal de blocage ou d'un ordre de réarmement, voir, par exemple, le document FR-A- 260 7274.

Le circuit de protection nécessite donc deux broches de connexion pour acquérir l'information d'intensité et respectivement bloquer la sortie affectée d'un court-circuit. Or, il serait souhaitable de protéger les voies de sortie au moyen d'un circuit intégré possédant un nombre minimal de broches de connexion.

L'invention a notamment pour but de simplifier la connexion d'un dispositif de protection pour sorties continues dans un ensemble programmable tel qu'un automate programmable, plus particulièrement en acquérant l'information de surintensité relative à une sortie et en bloquant celle-ci au moyen d'une même connexion.

L'invention concerne à cet effet un dispositif de commande et de protection pour voies de sortie en courant continu, notamment pour un automate programmable, comprenant pour chaque voie de sortie :
- un interrupteur électronique de puissance pour ouvrir et fermer la sortie,
- un circuit de commande de l'interrupteur et un circuit de protection de la sortie contre les surintensités, ce dernier circuit étant connecté à des moyens de détection délivrant une tension image de l'intensité dans la sortie, ledit dernier circuit comportant un comparateur auquel sont appliquées, sur une première entrée, la tension image d'intensité et, sur une deuxième entrée, une tension de référence, la sortie du comparateur étant reliée via un filtre à des moyens aptes à bloquer la voie lorsque ladite sortie change d'état en réponse à une surintensité de durée supérieure au temps de filtrage.

Selon l'invention, le circuit de protection présente une borne unique de connexion au circuit de commande et à l'interrupteur de puissance, cette borne étant reliée à la première entrée du comparateur pour surveiller la tension image d'intensité et bloquer la sortie, et les moyens de blocage ont une sortie reliée à un circuit de forçage de la première entrée du comparateur, de façon à maintenir bloqué l'interrupteur en réponse à une surintensité détectée.

De manière très simple, les moyens de blocage comprennent un élément de mémorisation qui reçoit, sur une entrée d'activation, la sortie filtrée du comparateur et, sur une entrée de désactivation, un signal de réarmement, la sortie de l'élément logique pilotant un interrupteur de forçage disposé entre la première entrée du comparateur et une source ou un puits de tension.

La description qui suit, en regard des dessins annexés, explicite les caractéristiques et avantages d'un exemple de réalisation de l'invention.
La figure 1 est le schéma de principe d'un dispositif de commande et de protection de sorties en courant continu selon l'invention.
La figure 2 montre de façon plus détaillée un exemple de mise en oeuvre de l'invention.

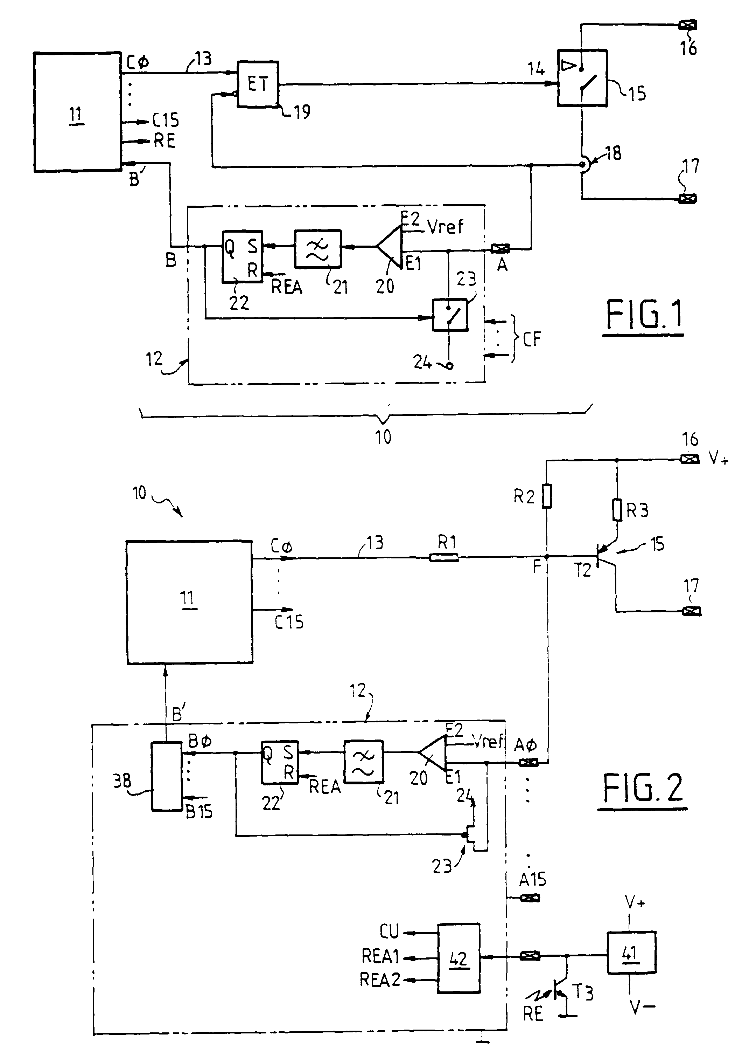

Le dispositif de commande et de protection 10 représenté sur la figure 1 est destiné à commander et protéger contre les surintensités des sorties en courant continu d'un automate programmable. Par surintensité, on désigne aussi bien les courants de surcharge que les courants de court-circuit.

Le dispositif 10 comprend pour un groupe de voies de sortie une unité de commande 11 dotée de sorties CO-Cn et n circuits de protection 12 dotés chacun d'une borne ou broche d'entrée A. Chaque sortie, par exemple celle qui est notée CO, est reliée par un conducteur 13 à une première entrée d'une porte ET 19 dont la sortie est reliée à la borne de commande 14 d'un interrupteur de puissance 15 disposé sur un conducteur reliant deux bornes 16, 17 pour commander l'ouverture et la fermeture d'un circuit de charge raccordé à ces bornes et comprenant une charge non représentée. En regard de la figure 1, ne sera décrit que l'agencement relatif à une seule voie de sortie.

Un détecteur 18 de l'intensité du courant qui parcourt le circuit de charge - et par exemple constitué par une résistance judicieusement placée - est connecté à la borne A. Cette borne est reliée à une première entrée E1 d'un comparateur 20 dont la sortie est reliée à un filtre passe-bas 21. A une deuxième entrée E2 du comparateur est appliqué un potentiel de référence Vref ; le dépassement du seuil de la tension image d'intensité en E1 provoque le changement d'état de la sortie du comparateur. La sortie du filtre 21 est reliée à une entrée d'une bascule RS 22 qui sert à mémoriser le changement d'état précité. Selon l'invention, la sortie Q de la bascule 22 est bouclée sur la borne de commande d'un interrupteur de forçage 23 agencé pour relier la borne A à une source ou un puits de tension 24. Le choix entre la nature de source ou de puits de tension est opéré en fonction de l'application souhaitée pour le dispositif 10 sous la dépendance de signaux de configuration CF. L'interrupteur 23 permet de maintenir à un niveau de forçage déterminé par la source ou le puits 24, la tension en A après détection d'une surintensité et tant qu'un signal de réarmement REA n'a pas été appliqué à la bascule 22. La borne A est connectée à une entrée inverseuse de la porte ET 19, celle-ci étant réalisable par tout moyen connu.

D'autre part, le signal disponible à la sortie Q de la bascule 22 du circuit 12 est transmis à l'unité de commande 11, par exemple au moyen d'une liaison parallèle pour les circuits 12 des différentes voies de sortie ou, de préférence, au moyen d'une liaison série qui regroupe, à l'aide d'un registre parallèle-série, les signaux BO-B15 provenant des bascules 22 des différentes voies en messages cycliques B′. L'unité de commande 11, après avoir constaté la détection d'une surintensité, envoie au circuit 12 un signal de réarmement RE qui est traduit par le signal de réarmement REA appliqué à la bascule 22.

Dans le mode de réalisation de la figure 2, le dispositif est utilisé pour commander et protéger des sorties en faible courant, par exemple à courant nominal de 0,1 A.

L'interrupteur de puissance 15 est ici un transistor bipolaire T2 de type PNP dont la base F, par ailleurs directement connectée à la borne A, est reliée, d'une part, au conducteur 13 via une résistance R1, d'autre part, à la borne 16 portée à un potentiel V+ de 24 volts par exemple via une résistance R2. L'émetteur du transistor T2 est relié à la borne 16 par une résistance R3 et son collecteur est relié à la borne de sortie 17.

Le circuit de protection 12 comporte un filtre dont le temps de filtrage est adapté à l'application ; un oscillateur de fréquence variable appartenant au circuit 12 est prévu à cet effet ; ainsi, un défaut de surintensité n'est mémorisé par la bascule 22 qu'au bout d'une durée déterminée par le filtre, par exemple 10 ms. La sortie de la bascule 22 est, d'une part, bouclée sur la grille d'un transistor MOS à canal P 23 capable de relier la borne A à une source de tension 24, d'autre part, reliée à l'une des seize entrées BO-B15 d'un registre parallèle-série 38 dont la sortie B′ est transmise à l'unité de commande 11. Les circuits 12 des différentes voies sont rassemblés avec un dispositif de surveillance de tension décrit plus loin dans un circuit intégré.

Un détecteur de tension 41 surveille la tension d'alimentation du groupe de sorties et il est relié à une borne AU du dispositif 10. La tension en AU est traitée par un circuit 42 du dispositif 10 pour engendrer un signal de défaut lorsque cette tension est insuffisante. Pour économiser les broches de connexion, on prévoit de forcer la borne AU par le signal de réarmement RE quand celui-ci est fourni par l'unité de commande 11 et appliqué à un optocoupleur T3. Le signal de défaut est transmis au circuit 42 qui discrimine les réarmements des manques de tension. Le circuit génère, d'une part, un signal de défaut de tension CU et, d'autre part, deux signaux REA1, REA2 dont chacun est destiné à réarmer un groupe de huit voies, en rétablissant les bascules 22 après détection d'un court-circuit et blocage de la sortie correspondante.

Le fonctionnement du dispositif selon l'invention va être décrit en regard de la figure 2.

Lorsque la sortie C de l'unité de commande 11 est à l'état logique 1, le transistor T2 est bloqué. Lorsque la sortie C est à l'état logique O, un courant fixé par la résistance R1 circule sur le conducteur 13 et le transistor T2 est passant tant que le courant dans le circuit de charge reste nominal ; le branchement du circuit de protection 12 ne modifie pas alors le potentiel au point F. Si un court-circuit se produit dans le circuit de charge, la tension VF au point F devient inférieure à Vref, la sortie du comparateur 20 change d'état, et ceci est mémorisé par la bascule 22 si la durée de la surintensité dépasse le temps de filtrage du filtre 21. Le changement d'état de la sortie Q de la bascule est transmis, d'une part, à la grille du transistor 23 qui devient passant et porte ainsi la borne A et le point F à un niveau de forçage qui correspond au potentiel de la source 24, par exemple 24 volts ; d'autre part, il est transmis par la liaison B′ à l'unité de commande 11. Le transistor T2 se bloque et le circuit de charge est donc ouvert jusqu'à ce qu'un signal de réarmement RE soit émis par l'unité de commande 11. Ce signal est traduit dans le circuit de sortie 12 en un signal REA1 ou REA2 appliqué à la bascule 22 pour changer d'état la sortie Q et bloquer le transistor 23. Après cette opération de réarmement, le circuit 12 ne force plus la tension aux points A et F qui va à nouveau dépendre du signal C et la présence ou l'absence d'une surintensité.

On constate l'économie de brochage qu'entraîne l'invention, puisque c'est la broche A du circuit de protection 12, utilisée pour surveiller le circuit de charge, qui sert également à bloquer ce circuit en cas de défaut.

## Revendications

1. Dispositif (10) de commande et de protection pour voies de sortie en courant continu, notamment pour un automate programmable, comprenant pour chaque voie de sortie (16,17):
- un interrupteur électronique de puissance (15) pour ouvrir et fermer la sortie (16,17),
- un circuit pour commander l'interrupteur (15) et un circuit (12) pour protéger la sortie (16,17) contre les surintensités, ce dernier circuit (12) étant connecté à des moyens de détection (18) délivrant une tension image de l'intensité dans la sortie (16,17), ledit dernier circuit (12) comportant un comparateur (20) auquel sont appliquées, sur une première entrée (E1), la tension image de l'intensité dans la sortie (16,17) et, sur une deuxième entrée (E2), une tension de référence (Vref), la sortie du comparateur (20) étant reliée via un filtre (21) à des moyens aptes à bloquer la voie lorsque ladite sortie change d'état en réponse à une surintensité de durée supérieure au temps de filtrage,
caractérisé par le fait que :
- le circuit de protection (12) présente une borne unique (A) de connexion au circuit de commande et à l'interrupteur de puissance (15), la borne (A) étant reliée à la première entrée (El) du comparateur (20) pour surveiller la tension image de l'intensité dans la sortie (16,17) et bloquer la sortie, et
- les moyens de blocage ont une sortie (B) reliée à un circuit (23,24) de forçage de la première entrée (E1) du comparateur (20), de façon à maintenir bloqué l'interrupteur (15) en réponse à une surintensité détectée.

2. Dispositif selon la revendication 1,
caractérisé par le fait que les moyens de blocage comprennent un élément de mémorisation (22) qui reçoit, sur une entrée d'activation (S), la sortie filtrée du comparateur et, sur une entrée de désactivation (R), un signal de réarmement (REA), la sortie (B) de l'élément de mémorisation (22) pilotant un interrupteur de forçage (23) disposé entre la première entrée (E1) du comparateur (20) et une source ou un puits de tension (24).

3. Dispositif selon la revendication 1 ou 2,
caractérisé par le fait que le circuit de protection (12) est un circuit intégré comportant pour chaque voie les moyens de détection (18), le comparateur (20) et le circuit de forçage (23, 24) et pour un groupe de n voies un registre série (38), ce registre présentant des entrées parallèles (BO-Bn) reliées aux éléments de mémorisation des différentes voies et une sortie série (B′) reliée à l'unité de commande (11).

4. Dispositif selon l'une des revendications 1 à 3,
caractérisé par le fait qu'un signal représentatif de la tension d'alimentation des voies de sortie est appliqué à une entrée (AU) du circuit de protection (12) pour engendrer un signal de défaut correspondant à un manque de tension, l'entrée (AU) étant forçable par un signal de réarmement (RE), le circuit de protection comprenant un circuit qui discrimine les réarmements des manques de tension.

## Patentansprüche

1. Steuer- und Schutzvorrichtung (10) für Gleichstrom-Ausgangsleitungen, insbesondere für einen programmierbaren Automaten, die für jede Ausgangsleitung (16, 17) aufweist:
- einen elektronischen Leistungsschalter (15), um den Ausgang (16, 17) zu öffnen und zu schließen;
- eine Schaltung, um den Schalter (15) zu steuern, und eine Schaltung (12), um den Ausgang (16, 17) vor Überströmen zu schützen, wobei diese letztere Schaltung (12) an Erfassungsmitteln (18) angeschlossen ist, die eine ein Bild der Stromstärke am Ausgang (16, 17) darstellende Spannung liefern, wobei diese letztere Schaltung (12) einen Komparator (20) aufweist, bei dem an einem ersten Eingang (El) die die Stromstärke am Ausgang (16, 17) abbildende Spannung und an einem zweiten Eingang (E2) eine Bezugsspannung (Vref) angelegt wird, wobei der Ausgang des Komparators (20) über ein Filter (21) mit Mitteln verbunden ist, die die Leitung blockieren können, wenn der Ausgang als Reaktion auf einen Überstrom, der länger dauert aus die Zeit der Filterung, seinen Zustand ändert,
dadurch gekennzeichnet, daß
- die Schutzschaltung (12) eine einzige Klemme (A) zum Anschluß an die Steuerschaltung und an den Leistungsschalter (15) aufweist, wobei die Klemme (A) mit dem ersten Eingang (El) des Komparators (20) verbunden ist, um die die Stromstärke am Ausgang (16, 17) abbildende Spannung zu überwachen und den Ausgang zu blockieren, und
- die Blockiermittel einen Ausgang (B) aufweisen, der mit einer Schaltung (23, 24) zum Steuern des ersten Eingangs (El) des Komparators (20) verbunden ist, um den Schalter (15) als Reaktion auf einen erfaßten Überstrom gesperrt zu halten.

2. Vorrichtung nach Anspruch 1, dadurch gekennzeichnet, daß die Blockiermittel ein Speicherelement (22) aufweisen, das an einem Aktivierungseingang (S) den gefilterten Ausgang des Komparators und an einem Desaktivierungseingang (R) ein Rückstellungssignal (REA) empfängt, wobei der Ausgang (B) des Speicherelements (22) einen Steuerschalter (23) steuert, der zwischen dem ersten Eingang (E1) des Komparators (20) und einer Spannungsquelle oder einer Spannungssenke (24) angeordnet ist.

3. Vorrichtung nach Anspruch 1 oder 2, dadurch gekennzeichnet, daß die Schutzschaltung (12) ein integrierter Schaltkreis ist, der für jede Leitung die Erfassungsmittel (18), den Komparator (20) und den Steuerschaltkreis (23, 24) und für eine Gruppe von n Leitungen ein Serienregister (38) aufweist, wobei dieses Register parallele Eingänge (BO-Bn), die mit den Speicherelementen der verschiedenen Leitungen verbunden sind, und einen Serienausgang (B') aufweist, der mit der Steuereinheit (11) verbunden ist.

4. Vorrichtung nach einem der Ansprüche 1 bis 3, dadurch gekennzeichnet, daß ein für die Speisespannung der Ausgangsleitungen repräsentatives Signal an einen Eingang (AU) der Schutzschaltung (12) angelegt wird, um ein einem Spannungsausfall entsprechendes Fehlersignal zu erzeugen, wobei der Eingang (AU) von einem Rückstellungssignal (RE) gesteuert werden kann, wobei die Schutzschaltung eine Schaltung aufweist, die die Rückstellungen der Spannungsausfälle diskriminiert.

## Claims

1. DC output channel control and protection device (10), in particular for programmable automatic controllers, comprising for each output channel (16,17):
- an electronic power switch (15) for opening and closing the output (16,17),
- a circuit for controlling the switch (15) and a circuit (12) for protecting the output (16,17) against overcurrents, this latter circuit (12) being connected to detector means (18) for delivering a voltage imaging the current at the output (16,17), this latter circuit (12) comprising a comparator (20) for receiving on a first input (El) the image voltage of the current in the output (16, 17) and on a second input ( E2) a reference voltage (Vref), the output of said comparator (20) being connected via a filter (21) to means adapted to disable said channel if said output changes state in response to an overcurrent of a duration exceeding the filtering time,
characterized in that
- the protection circuit (12) has a single connection terminal (A) to the control circuit and to the power switch (15), this terminal (A) being connected to the first input (El) of the comparator (20) to monitor the image voltage of the current in the output (16,17) and disable the output, and
- the disabling means have an output (B) connected to a circuit (23,24) for forcing the first input (El) of said comparator (20) so as to keep said switch (15) disabled in response to a detected overvoltage.

2. Device according to claim 1
characterized in that said disabling means comprise storage means (22) for receiving on an activation input (S) the filtered output of said comparator and on a de-activation input (R) a reset signal (REA) and the output (B) of said storage means controls a forcing switch (23) disposed between said first input (El) of said comparator (20) and a voltage source or sink (24).

3. Device according to claim 1 or 2,
characterized in that said protection circuit (12) is an integrated circuit comprising for each channel said detector means (18), said comparator (20) and said forcing circuit (23,24) and for a group of n channels a serial register (38) having parallel inputs (BO-Bn) connected to said storage means of the various channels and a serial output (B') connected to said control unit (11).

4. Device according to one of claims 1 to 3,
characterized in that a signal representing the supply voltage of the output channels is applied to an input (AU) of said protection circuit (12) to generate a fault signal representing loss of voltage, said input (AU) is adapted to be forced by a reset signal (RE) and said protection circuit comprises a circuit discriminating between resetting and loss of voltage.
